# EUROPEAN PATENT APPLICATION

(11) **EP 3 076 346 A1**
(43) Date of publication of application: **05.10.2016**
(21) Application number: 16162077.8
(22) Date of filing: 23.03.2016
(51) Int. Cl.: G06Q 10/04, G06Q 10/06, G06Q 50/06

(54) **SYSTEMS AND METHODS FOR IMPROVED DEMAND RESPONSE MANAGEMENT SYSTEM (DRMS)**

(30) Priority: 30.03.2015 US 201514673552
(71) Applicant: General Electric Company, Schenectady, NY 12345 (US)
(72) Inventor: MASSEY, Jerry Steven, Atlanta, GA 30339 (US); WILSON, Bobby Antione, Atlanta, GA 30339 (US); MEADOWS, Vernon, Lilburn, GA 30047 (US); ANNAVAJJALA, Santhi, Atlanta, GA 30339 (US); SHAVER, Jamison, Atlanta, GA 30339 (US); ACHARYA, Sthitaprajna, Atlanta, GA 30339 (US); GONG, Zheng, Atlanta, GA 30339 (US); LYNCH, Robert, Atlanta, GA 30339 (US); LOSEE, Marc Karl, Atlanta, GA 30339 (US)
(74) Representative: Cleary, Fidelma

(57) **Abstract**

The embodiments described herein provide a system including a processor (47) configured to execute a demand response management system (DRMS) integrity check system (46). The DRMS integrity system (48) is configured to query a database system (10) of the DRMS based on a first data to retrieve a second data, wherein the first data is configured to be used by the DRMS (10) during a demand response event to respond to the event. The DRMS integrity system (48) is further configure to verify integrity of the database (50) by verifying that the second data includes a desired data property. The DRMS integrity system (48) is additionally configured to communicate an indication of the integrity of the database (50).

## Description

### BACKGROUND

The subject matter disclosed herein relates to demand response management systems (DRMSes), and more specifically to techniques suitable for enhancing operations of the DRMSes.

A power grid may include a DRMS suitable for improving reserve capacity of power supply systems by responding, in a more desired manner, to demand events. For example, during peak demand conditions, the DMRS may transmit a request to certain customers asking the customers to reduce their energy usage, thus lowering an amount of energy that may have been used during the peak demand conditions. Accordingly, the DMRS may dynamically manage energy demand to provide for a more efficient power grid system.

Some systems, such as a one-way DRMS, may communicate with the customers one-way only. For example, the DRMS may transmit requests to customers to temporarily turn off devices one-way via telephone lines, pagers, and the like. Other systems, such as two-way DRMS may, in addition to transmitting requests to customers, may receive communications from customer sites. For example, a customer's smart meter disposed in an advanced metering infrastructure (AMI) system may deliver data back to the two-way DRMS. It may be beneficial to improve both the one-way and two-way DRMSes to enable more efficient operations.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

A first embodiment provides a system including a processor configured to execute a demand response management system (DRMS) integrity check system. The DRMS integrity system is configured to query a database system of the DRMS based on a first data to retrieve a second data, wherein the first data is configured to be used by the DRMS during a demand response event to respond to the event. The DRMS integrity system is further configure to verify integrity of the database by verifying that the second data includes a desired data property. The DRMS integrity system is additionally configured to communicate an indication of the integrity of the database.

A second embodiment provides a method. The method includes executing, via a processor, at least one of a data integrity system configured to verify a database integrity for a demand response management system (DRMS). The method further includes executing via the processor, a communications integrity system configured to verify communications for the DRMS during a demand response event. The method additionally includes executing, via the processor, a post event integrity analysis system configured to derive one or more metrics associated with an occurrence of the demand response event. The method also includes, executing, via the processor, a policy integrity system configured to verify one or more limits related to the demand response event. The method further includes, executing, via the processor, a simulation system configured to simulate the demand response event.

A third embodiment provides a tangible, non-transitory, computer-readable medium storing instructions executable by a processor of an electronic device, the instructions configured to cause a processor to execute data integrity system configured to verify a database integrity for a demand response management system (DRMS). The instructions are further configured to cause the processor to execute a communications integrity system configured to verify communications for the DRMS during a demand response event. The instructions are additionally configured to cause the processor to execute a post event integrity analysis system configured to derive one or more metrics associated with an occurrence of the demand response event. The instructions are also configured to cause the processor to execute a policy integrity system configured to verify one or more limits related to the demand response event. The instructions are further configured to cause the processor to execute a simulation system configured to simulate the demand response event.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a power generation, transmission, and distribution system operatively coupled to a DRMS, and a DRMS integrity check system coupled to the DRMS;
FIG. 2 is a block diagram of an embodiment of a protection and control system depicted in FIG. 1 with a management center and multiple substations each including multiple intelligent electronic devices;
FIG. 3 a block diagram of an embodiment of the protection and control system depicted in FIG. 2 with a remote management system;
FIG. 4 is a flow chart depicting an embodiment of a process for authenticating the intelligent electronic device in the embodiment depicted in FIG. 3;
FIG. 5 is a flow chart depicting an embodiment of a process for configuring the intelligent electronic device in the embodiment depicted in FIG. 3;
FIG. 6 is a flow chart depicting an embodiment of a process for sending data from the intelligent electronic device in the embodiment depicted in FIG. 3;
FIG. 7 is a flow chart depicting an embodiment of a process for retrieving measurement logs from the intelligent electronic device in the embodiment depicted in FIG. 3;
FIG. 8 is a flow chart depicting an embodiment of a process for executing a control command on the intelligent electronic device in the embodiment depicted in FIG. 3;
FIG. 9 is a block diagram of an embodiment of the protection and control system depicted in FIG. 2 with a remote authentication server and a computing device;
FIG. 10 is a flow chart depicting an embodiment of a process for configuring the intelligent electronic device in the embodiment depicted in FIG. 9;
FIG. 11 is a flow chart depicting an embodiment of a process for executing a control command on the intelligent electronic device in the embodiment depicted in FIG. 9;
FIG. 12 is a flow chart depicting an embodiment of a process for transmitting data from the intelligent electronic device to the computing device in the embodiment depicted in FIG. 9;
FIG. 13 is a block diagram of an embodiment of the protection and control system depicted in FIG. 2 in a local topology;
FIG. 14 is a flow chart depicting a process for coupling the intelligent electronic device and the computing device in the embodiment depicted in FIG. 13; and
FIG. 15 is a flow chart depicting an embodiment of a process for authenticating the intelligent electronic device in the embodiment depicted in FIG. 13.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure describes techniques suitable for improving a demand response management system (DRMS), and may be applicable to existing systems, including one-way and two-way DRMSes that may already be commissioned and providing services in the field. The DRMSes are suitable for managing demand events, which enable a lowering of power production and/or distribution via a lowering of energy usage by certain customers. In certain embodiments, the techniques described herein may provide for data integrity verification and validation of the DRMS to improve data element integrity, data structure integrity, and/or database programmatic integrity. For example, data elements may be analyzed to ensure that they meet certain desired conditions, e.g., that a participant includes a participant ID, an enrolled device, a related utility provider ID, and so on, as described in more detail below. The techniques described herein may also provide for policy verification and validation of the DRMS to improve, for example, contractual agreements (e.g., number of times a customer is scheduled to participate in a demand event), regulatory policies, customer options, and so on.

The present disclosure also includes improvements in DRMS communications integrity. For example, the techniques are disclosed for providing that event participants receive timely and complete event information, that communications bottlenecks are accounted for, reduced, or eliminated, and that inoperable devices are detected, as described in more detail below. Additionally, the disclosures herein provide for applying feedback or post-analysis techniques suitable for improvements in data integrity, policy integrity, communications integrity, and integrity post-event analysis. Additionally, a process is provided suitable for forecasting or predicting a load reduction based on certain groupings, as described in more detail below with respect to the figures below.

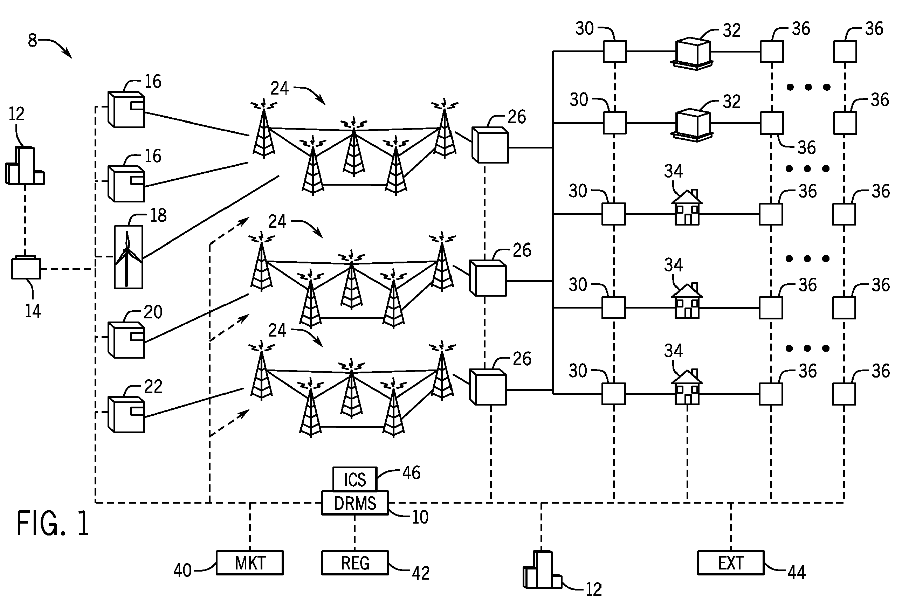

With the foregoing in mind, it may be useful to describe an embodiment of a system, such as a power grid system 8 operatively coupled to a DRMS 10, as illustrated in FIG. 1. As depicted, the power grid system 8 may include one or more utilities 12. The utility 12 may provide for power production and oversight operations of the power grid system 8. For example, utility control centers 14 may monitor and direct power produced by one or more power generation stations 16 and alternative power generation stations 18. The power generation stations 16 may include conventional power generation stations, such as power generation stations using gas, coal, biomass, and other carbonaceous products for fuel. The alternative power generation stations 18 may include power generation stations using solar power, wind power, hydroelectric power, geothermal power, and other alternative sources of power (e.g., renewable energy) to produce electricity. Other infrastructure components may include a water power producing plant 20 and geothermal power producing plant 22. For example, water power producing plants 20 may provide for hydroelectric power generation, and geothermal power producing plants 22 may provide for geothermal power generation.

The power generated by the power generation stations 16, 18, 20, and 22 may be transmitted through a power transmission grid 24. The power transmission grid 24 may cover a broad geographic region or regions, such as one or more municipalities, states, or countries. The transmission grid 24 may also be a single phase alternating current (AC) system, but most generally may be a three-phase AC current system. As depicted, the power transmission grid 24 may include a series of towers to support a series of overhead electrical conductors in various configurations. For example, extreme high voltage (EHV) conductors may be arranged in a three conductor bundle, having a conductor for each of three phases. The power transmission grid 24 may support nominal system voltages in the ranges of 110 kilovolts (kV) to 765 kilovolts (kV). In the depicted embodiment, the power transmission grid 24 may be electrically coupled to distribution systems (e.g., power distribution substation 26). The power distribution substation 26 may include transformers to transform the voltage of the incoming power from a transmission voltage (e.g., 765 kV, 500kV, 345kV, or 138kV) to primary (e.g., 13.8kV or 4160V) and secondary (e.g., 480V, 230V, or 120V) distribution voltages.

Advanced metering infrastructure meters (e.g., smart meters) 30 may be used to monitor and communicated power related information based on electric power delivered to commercial consumers 32 and residential consumers 34. For example, the smart meters 30 may include two-way communications with the grid 8 and the DRMS 10 suitable for communicating a variety of information, including power usage, tampering, power outage notification, power quality monitoring, and the like. The smart meters 30 may additional receive information, for example, demand response actions, time-of-use pricing information, remote service disconnects, and the like. For example, the demand response actions may be transmitted by the DRMS 10 to a selected group of customers 32 and/or 34, as described in more detail below, to reduce peak demand of power.

The customers 32, 34 may operate a variety of power consuming devices 36, such as household appliances, industrial machinery, communications equipment, and the like. In certain embodiments, the power consuming devices 36 may be communicatively coupled to the grid system 8, the DRMS 10, and/or the meters 30. For example, the power consuming devices 36 may include switches that may be actuated remotely to turn on/off the devices 36 and/or to vary power consumption (e.g., lower or rise heating ventilation and air conditioning [HVAC] temperature set points). The smart meters 30 and the power consuming devices 36 may be communicatively coupled, for example, through a home area network (HAN), (for residential customers 34), wireless area network (WAN), powerline network, local area network (LAN), mesh network and the like.

As mentioned earlier the DRMS 10 may be operatively coupled to the grid system 8 (smart grid) and used to more efficiently manage power distribution and/or power production capital expenditures (e.g., building new power production facilities 16, 18, 20, 22, for example, by interfacing with the customers 32, 34 and lowering peak energy loadings. The DRMS may be used as a centralized source of power usage data (e.g., electric usage for customers 32, 34), contractual agreement data, regulatory compliance data, electric power producing capability data, outage data, power transmission data, and the like. Accordingly, utilities 12 may make more informed decision regarding, for example, the impact of calling a load control event that asks customers 32 and/or 34 to reduce energy loading, the impact of demand response pricing (e.g., changes in pricing based on certain conditions, including current load conditions), and the like.

Accordingly, the DRMS 10 may additionally have access to additional systems, such as energy market systems 40 (e.g., energy trading systems, energy credit trading systems, carbon discharge trading systems, futures trading systems), regulatory systems 42 (e.g., municipal, state, federal, international regulatory agencies), other utilities 12, and external systems 44. The external systems 44 may include third party contractor systems assisting with various functions for the utilities 12 (e.g., IT functions, business functions, inspection functions, maintenance functions), historian systems (e.g., systems that log historical data, including data produced by all the systems 8-44 depicted in FIG. 1), and the like. In certain embodiments, the DRMS 10 may be a PowerOn™ Precision system, available from General Electric Corporation of Schenectady, New York

Also depicted is a DRMS integrity check system 46. As mentioned earlier, the integrity check system 46 may verify and validate certain data integrity, policy, integrity, communications integrity, and/or and integrity post-event analysis. In the depicted embodiment, the DRMS integrity check system 46 may be added to the DRMS 10 at a later time, for example, after installation of the DRMS 10. Indeed, in certain embodiments, the DRMS integrity check system 46 may be retrofitted to work alongside an already installed DRMS 10 without any programming and/or hardware changes to the DRMS 10. In other embodiments, the DRMS integrity check system 46 may be provided as a subsystem of the DRMS 10 and installed alongside the DRMS 10. Additionally or alternative, a service provider system 44 that may be used by a third party service provider to provide the utility 12 with certain support functions (e.g., IT functions) may include the DRMS integrity check system 46 and/or the DRMS 10.

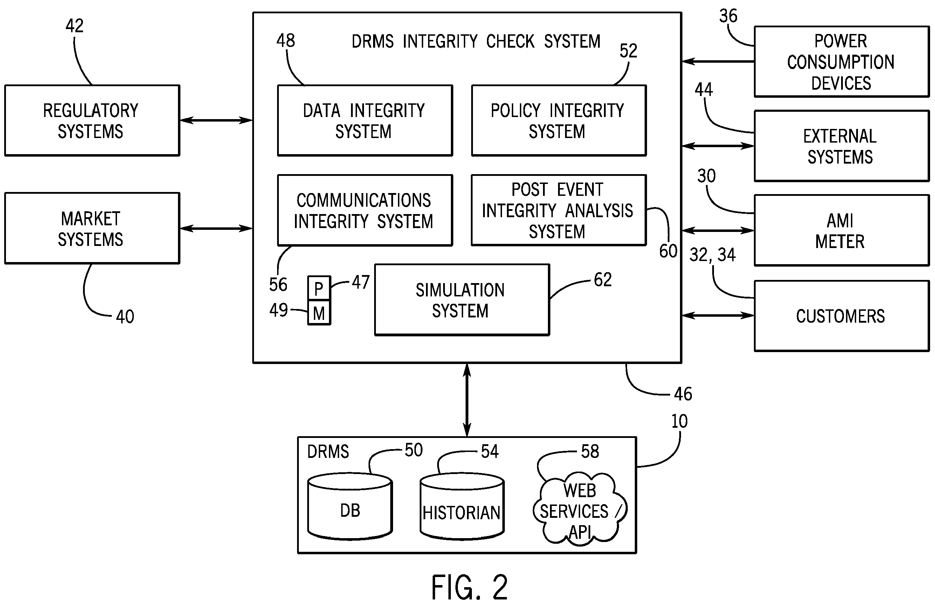

FIG. 2 depicts a block diagram of an embodiment of the DRMS integrity check system 46 communicatively coupled to the DRMS 10. The DRMS integrity check system 46 may include one or more processors 47 and memory 49. The memory 49 may store computer instructions or code, and/or other data. In the depicted embodiment, the DRMS integrity check system 46 includes a data integrity system 48. The data integrity system 48 may analyze the DRMS 10 to derive issued related to, for example, a data store 50. For example, the data integrity system 48 may query the data store 50 for data relationship integrity and/or data structure integrity. For example, to derive data relationship integrity, the DRMS integrity check system 46 may query the data store 50 to retrieve a list of objects or data (e.g., collectively referred to as database objects) related to an upcoming demand response event. The objects or data may include customers 32, 34 for the utility 12, and associated information. Further details of a process that may be used by the data integrity system 48

To derive a structural integrity check, the data integrity system 48 may query the data store 50 metadata to derive the data store's 50 database structure. For example, for relational databases 50, the queried structure may result in a set of tables, keys, indexes, triggers, constraints, and so on, that provides the repositories storing data (e.g. customer information, event information, market data, regulatory data). The metadata may then be compared to note any differences between the retrieved metadata and a desired metadata, such as a manufacturer-provided metadata, to verify that the data structure for the data store 50 is as desired. Undesired differences (e.g., missing tables, columns, primary keys, indexes, and the like), may then be corrected before the demand response event.

The policy integrity system 52 may be used to improve performance of contractual agreements, meet a variety of regulations, and/or improve other formal or informal policies relating to a demand response event. For example, contractual agreements between the utility 12 and customer 32, 34 may provide for limits on the number of events that the customers 32 and/or 34 are asked to participate in, limits on days of the week for events, exclusion times, regulatory limits, and so on. Accordingly, the policy integrity system 52 may query the data store 50 and/or a historian system 54 for policy-related data. The historian system 54, for example, may store logged data related to previous demand response events. Likewise, the policy integrity system 52 may query regulatory systems 42, to determine, for example, compliance limits, pollution counts, power production regulations, and the like. Additionally, the policy integrity system 52 may query the market systems 40 to derive, for example, costs of energy, pollution credit costs, future energy values, and so on. Other external systems 44 may be similarly queried to aid in deriving policy integrity. More details on a process for policy integrity are disclosed with respect to the figures below.

A communication integrity system 56 may provide for improved communications integrity, for example, between the DRMS 10 and the customers 32, 34, smart meters 30, and/or power consumption devices 36. Accordingly, the communication integrity system 56 may be additionally communicatively coupled to the customers 32, 34, smart meters 30, and/or power consumption devices 36. Indeed, the communication integrity system 56 may be communicatively coupled to all devices of the grid 8, including data concentrators, power distribution devices, and the like. In certain embodiments, the communication integrity system 56 may identify communications that may be desired for a given demand response event and determine if the data used in the communications is available. Additionally or alternatively, the communication integrity system 56 may determine if the communication channels, including web service or API calls 58 are functioning as expected, and provide for throughput analysis and diagnostics that may be customized to the upcoming event. Further details of the communication integrity system 56 are described in the figures below.

A post-event integrity analysis system 60 is also provided, suitable for analyzing data during or post-event to determine metrics of event success. For example, the post-event integrity analysis system 60 may be used to derive success metrics for how the DRMS 10 (e.g., data store 50, historian 54, services/API calls 58) functioned during the event, as well as the meters 30, the customers 32, 34, the devices 36, and/or the systems 40, 42, 44. Corrective actions may then be taken based on post-event analysis. More details of the post-event integrity analysis system 60 are described in the figures below.

A demand response simulation system 62 is also provided. The demand response simulation system 62 may initiate a trial run of the demand response event where the DRMS 10 is used *in situ* as if a demand response event is initiated. However, the demand response simulation system 62 may intercept communications that would normally leave the DRMS 10 to outside systems 30, 32, 34, 36, 40, 42, 44, and so on, and thus prevent actual execution of the event. The event response may then be analyzed to determine performance metrics, undesired functionality, and so on. More details of the demand response simulation system 62 are described with respect to the figures below.

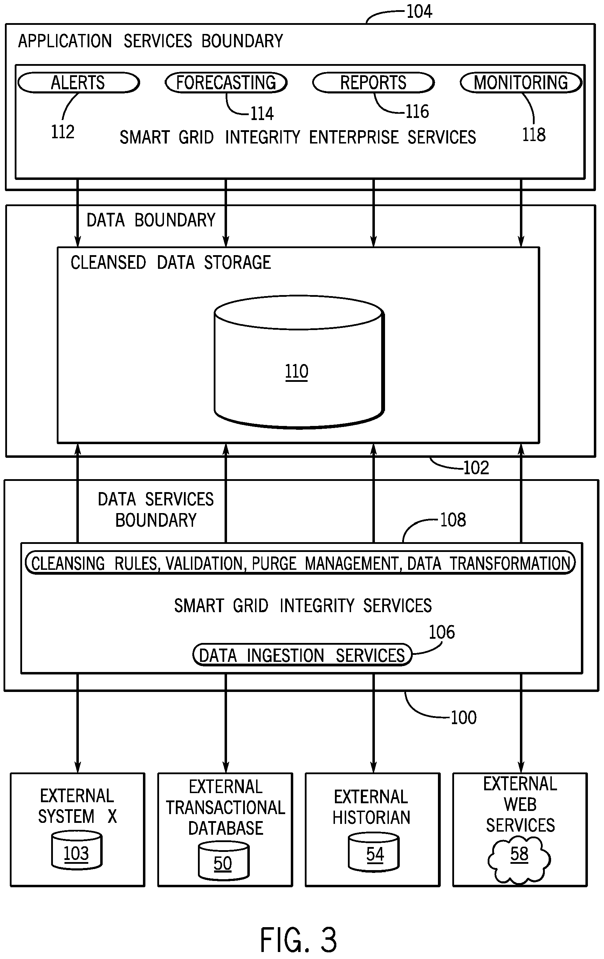

FIG. 3 depicts an embodiment of a system architecture that may be used by the integrity check system 46. More specifically, the figure depicts the architecture having three layers 100, 102, and 104. Layer 100 is depicted as a data services layer. Accordingly, the data services layer 100 is shown as communicatively coupled to a variety of systems external to the integrity check system 46, including an external system x 103, such as a system suitable for providing customer data, power measurement data, regulatory data, event data, market data and so on. Also depicted is the external transactional database system 50, which may include relational databases, network databases, file systems, and so on, may also be communicatively coupled to the layer 100. Also shown is the historian 54 and the web services 58 communicatively coupled to the layer 100. The layer 100 may include a sublayer 106 suitable for intaking a diverse set of data in different formats and with different techniques. For example, relational database queries, web services protocols (e.g.., SOAP, JSON, dynamic XML), data mining services, translation services, and so on, may be used. A sublayer 108 may provide for cleaning services, validation services, purge management service, and/or data transformation services. For example, data formats may be checked to ensure proper data types (e.g., numeric, text, string), incorrect data may be purged (e.g., null records removed), and data may be transformed from on format to one or more different formats suitable for storage in a cleansed data storage 110.

The cleansed data storage 110 may thus, after receiving data via the layer 100, stored data related to customers, power systems (e.g., power supply and maintenance systems), regulations, and/or markets, that has been "cleansed" to provide a more reliable and efficient data store 110. For example, redundant data (e.g., data values that show up more than once in multiple locations) may have been cleansed and stored in a single data location. Likewise, erroneous data may have been corrected or removed, and data in certain formats may have been translated to a format more useful for access via the systems disposed in layer 104. In this manner, the cleansed data storage system 110 may provide for more efficient response to queries and higher data robustness and reliability.

The layer 104 may include systems such as an alerts system 112, a forecasting system 114, a reports system 116, and/or a monitoring system 118. The alerts system 112 may provide for alerts or alarms related to events that are currently ongoing, such as energy usage, customer participation in the event, outages, and so on. The forecasting system 114 may provide for forecasts related to power utilization during an event, number of customer participants, customer options that may be selected, and so on. The reports system 116 may provide for reporting, including on-demand reporting, of any number of data in the cleansed data storage 110, including customer data, event data, power systems supply and maintenance data, regulatory data, market data, and so forth.

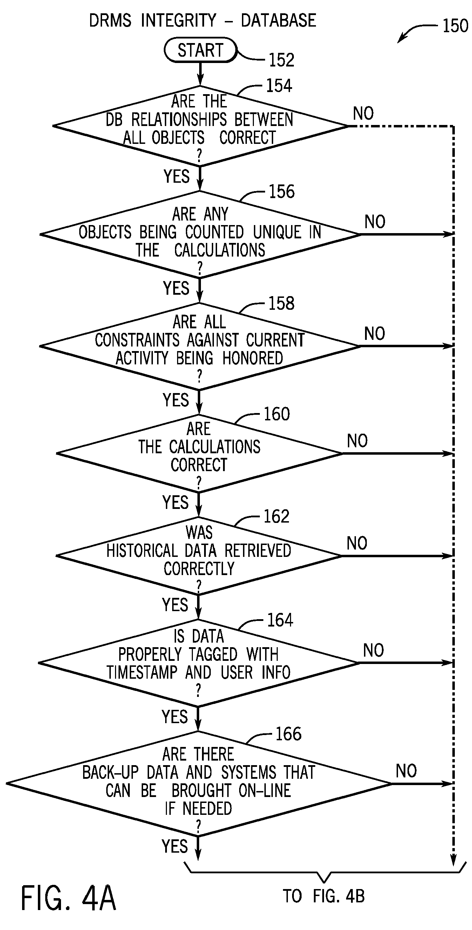

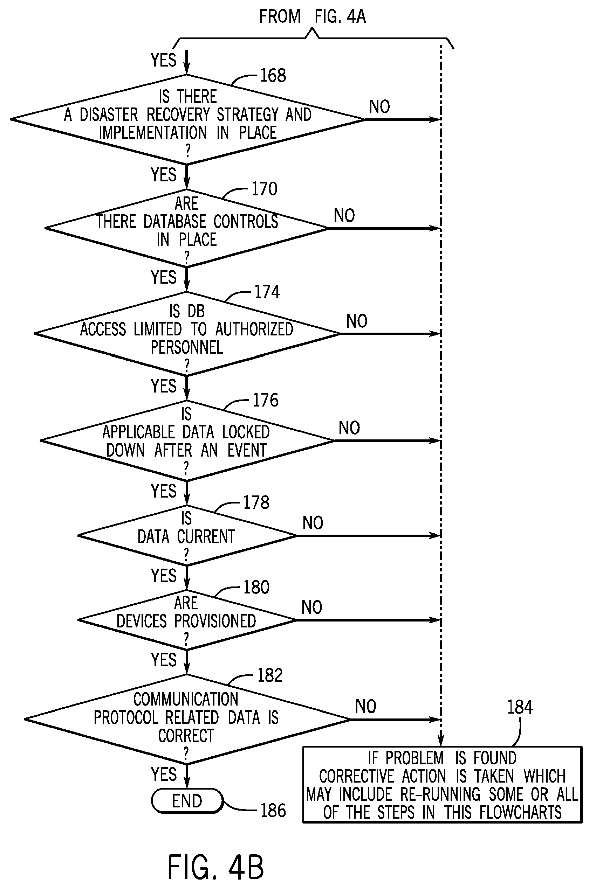

The monitoring system 118 may monitor the cleansed data store 110 for certain conditions, which may include user-configurable conditions related to the demand event (or other event) that is about to take place or is now taking place. For example, event conditions may be monitored to ensure data integrity, policy integrity, communications system integrity, and/or post event integrity as described in more detail below. Turning now to FIG. 4, the figure is a flow chart of an embodiment of a process 150 suitable for improving data integrity of, for example of the DRMS 10 and/or data storage 110. The process 150 may be implemented as computer instructions or code executed via the processor(s) 47 of the DRMS Integrity system 46 and stored in the memory 49.

In the depicted embodiment, the process 150 may begin at block 152 and may then determine (decision 154) if the relationships between objects of the data store (e.g., DRMS 10 and/or data storage 110 objects) are correct. That is, the process 150 may verify that customer IDs are correct and that each customer associated with the ID includes certain relationships with other objects of data stores 10, 110, such as meter objects, utility provider objects, power system (e.g., power delivery) objects, market data objects, regulatory data objects, event related objects (e.g., date of event start, time of start, duration), and so on. For example, an electric customer should have a relationship with a meter object, and if no such relationship exists, then the process 150 would derive this error. The electric customer may also have a relationship with a demand participation object, a calendar object, and so on. Likewise, the remainder blocks of the process 150 may be used to provide for a more robust integrity of the data systems 10, 110.

For example, the process 150 may then determine (decision 156) if objects of the data stores (e.g., data stores 10, 110) that are going to be used in certain derivations or calculations are unique in the data store(s) 10, 110. That is, certain objects should be unique, for example, a customer ID should be stored only once. Likewise, certain meters, equipment, events, market data, regulatory data, and so on, should only be found once in the database (decision 156). Likewise, the process 150 may determine (decision 158) if all constraints against a current activity are being honored. For example, an activity may include event related activities such as customer participation in the demand event, number of times a customer may participate in a certain time period (e.g., week, month, year), amount of power a customer should be using during events, equipment types and numbers that will participate (e.g., trucks, personnel types), and so on.

The process 150 may also determine (decision 160) if certain calculations are correct. For example, the process 150 may verify that the customer participation and total power usage are calculated to be sufficient to meet power demands associated with the event, that conditions are calculated to meet regulatory requirements, market requirements, and so forth. The process 150 may additionally determine (decision 162) if historical data was retrieved correctly. For example, verification processes may be executed to count number of records retrieved from historical data sources (e.g., historian 54) versus number of records entered based on the retrieval. Likewise, validation processes may audit the records retrieved to ensure that the records are correctly formatted, have the correct number of digits (e.g., ID digits), the records were retrieved from the correct historical repository, and the like.

The process 150 may also determine (decision 164) if data suitable for timestamping was properly tagged with timestamp and user information. For example, timestamps may include date and time of retrieval from historical data sources, timestamps associated for when calculations were made, timestamps associated with inserts, updates, and/or deletes of data, and so on. User information may include users associated with the data (e.g., utility users, customers) as well as users that manipulated the data.

The process 150 may further determine (decision 166) if backup data and systems are ready for use when needed. For example, redundant information systems may be provided in case of outages during the event. Likewise, backup data stores may be provided and disposed at multiple geographic locations to provide for redundant backup operations if needed. A determination (decision 168) may also be made that there is a disaster recovery strategy and implementation in place. For example, a disaster recovery plan may be audited to ensure that the plan meets certain conditions, such as return to operations (RTO) times, availability of certified IT personnel, availability of certain systems (e.g., back up and restore systems), identification of roles and responsibilities, of critical systems and 24x7 operation systems, and so on.

The process 150 may similarly determine (decision 168) if certain database controls are in place, such as data size controls, overflow of data controls, hardware controls (e.g., number of processors, size of storage drives), software controls (e.g., relational database constraints, indexes, data services controls), and the like. The process 150 may continue (continuation 172) by determining (decision 174) if access to data stores (e.g., 10, 110) is limited to certain authorized personnel. For example, role-based access may be implemented, login audits, password audits, and so on, may be implemented. Likewise, multi-factor authentication, hardware token authentication, biometric authentication, certificate authority authentication, and the like, may be provided.

Once the demand event has taken place, the process 150 may determine (decision 176) that applicable data is locked down. For example, data useful for verifying and validating certain aspects of the event, such as customer response, utility response, IT response, response times, power available, power used, and so on, may be locked for future analysis. Likewise, certain data may be verified (decision 178) as current. For example, data from the latest demand event may be verified as most current for further analysis. Likewise, customer information, meter information, utility information, personnel information, regulatory information, and/or market information may be checked to ensure that the information is current.

The process 150 may then determine (decision 180) that devices (e.g., meters, utility devices, IT devices) are provisioned as desired. For example, meters may be provisioned by updating, inserting, and/or deleting meter information at the utility so that the utility may better communicate with data received from the meters (and vice versa). Likewise, utility devices (e.g., power delivery devices, power switching devices), IT devices (e.g., servers, workstations, laptops, cell phones, tablets) may be verified for proper provisioning.

In the depicted embodiment, the process 150 may also determine (decision 182) that communication protocol related data is correct. For example, frame rates, data packet sizes, protocols to be used, wireless frequencies for communication, and so on, may be verified to ensure that the data related to communications protocols is more correct. If any of the determinations 154-182 yield a "No," the process 150 may then (block 184)apply data derived during the determination (e.g., problem found) to apply a corrective action (block 184) and the process 150 may then be re-executed (or the problem block re-executed). The process 150 may then stop at block 186. By executing the process 150, an automated technique for improving data store integrity is provided.

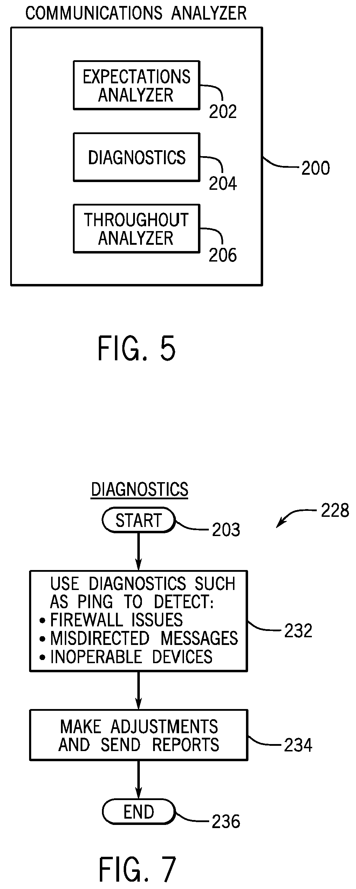

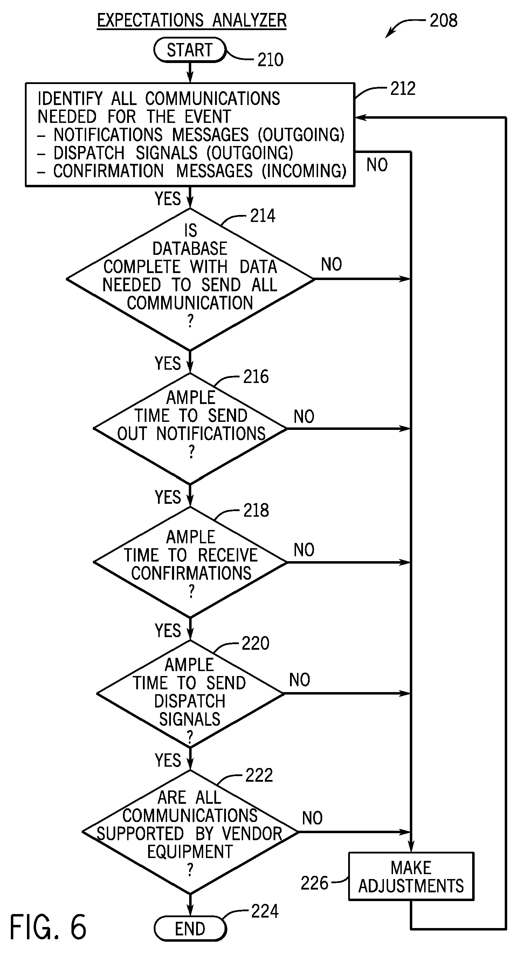

Turning now to FIG. 5, the figure is a block diagram of an embodiment of a communications analyzer 200 that may be included, for example, in the communications integrity system 56. The communications analyzer 200 may be a hardware or software system suitable for analyzing communications systems, infrastructure, and protocols that may be used during a demand event. The communications analyzer may include an expectations analyzer subsystem 202, a diagnostics subsystem 204, and/or a throughput analyzer subsystem 206. Each subsystem 202, 204, 206 will be further described with respect to FIGS. 6-8.

For example, FIG. 6 is a flow chart of an embodiment of a process 208 that may be executed by the expectations analyzer 202. The process 208 may be implemented as computer instructions or code executable via processor 47 and stored in the memory 49. The process 208 may be executed to help ensure that communications expectations are met during the demand event. In the depicted embodiment, the process 208 may begin at block 210, and then identify (block 212) several or all communications that may be needed for the upcoming event. Communications may include wired and/or wireless communications between the utility and customer sites, as well as communications with utility personnel, IT personnel, and so on. For example, notification messages (outgoing) communications, dispatch signals (outgoing), and confirmation messages (incoming) may be identified (block 212).

Once communications are identified, the process 208 may determine (decision 214) if the database (e.g., data stores 10, 110) include data that is needed to send the communications determined earlier. For example, data related to the, notification messages (outgoing) communications, dispatch signals (outgoing), and confirmation messages (incoming) may be checked to ensure that the related data is present for communications. The process 208 may then determine (decision 216) if ample time is present for sending the desired communications. For example, certain communications may take longer than others, and so the determination at decision 216 may help ensure that outgoing communications are set to arrive when desired. Likewise, the process 208 may determine (decision 218) if there is ample time to receive confirmations (e.g., confirmation of receipt of notifications). In a similar manner, the process 208 may then determine (decision 220) if there is ample time to send dispatch signals, such as signals sent to start and/or control the demand event.

The process 208 may additionally determine (decision 222) if communications are adequately supported by vendor equipment that may be used to transmit/receive data during the event. If the block 212 and decisions 214-222 are successful, the process 208 may terminate at block 224. Otherwise, the process 208 may make necessary adjustments (block 224) based on the derivations found during execution of the block 212 and decisions 214-222.

FIG. 7 is a flow chart of a process 228 that may be executed by the diagnostic system 204. The process 228 may be implemented as computer instructions or code executable via processor 47 and stored in the memory 49. In the depicted embodiment, the process 228 may begin at block 230 by applying certain communication diagnostic techniques, such as "ping" techniques, suitable for detecting communication issues, such as firewall issues, misdirected messages, devices that may not be responding or responding timely, and so on. Ping data may be sent via the diagnostic system 204 and the responses (or lack thereof) may be used to derive response times, firewalls that may prevent or slow down certain data or ports from being used, messages that may go to erroneous addresses, and the like. The derived responses or lack of responses may then be used to make adjustments (block 214) to the communications devices and reports may be prepared. The process 228 may then end at block 236.

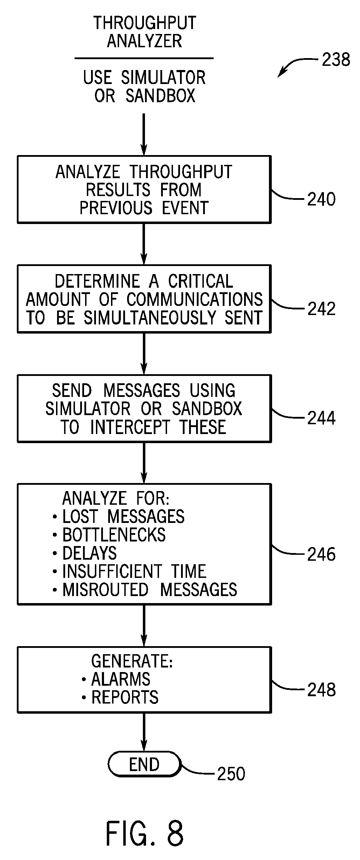

FIG. 8 is a flow chart of a process 238 that may be executed by the throughput analyzer system 206. The process 238 may be implemented as computer instructions or code executable via processor 47 and stored in the memory 49. In the depicted embodiment, the process 238 may execute the simulation system 62 (or sandbox). The process 238 may first analyze (block 240) throughput results from previous events. The analysis may be used to determine (block 242) a critical amount of communications to be simultaneously sent. For example, Shannon's information theory (or other techniques) may be used to determine how much (and type) of communications that may be sent during the demand events, thus determining throughput. It is to be noted that throughput may be determined at various levels, such as for specific devices, systems, entities (e.g., specific customers, utilities) and so on.

The simulation system 62 may then be executed to send and/or receive (block 244) a number of messages. The process 238 may then analyze (block 246) the messages to determine, for example, lost messages, bottlenecks in various systems or devices, delays, insufficient communication times, misrouted messages, and so on. In this manner, the previous event's data may be suitable for analyzing communications, including throughput. The process 238 may then generate (block 248) a set of reports and/or alarms detailing the various findings. Accordingly, a more robust, reliable, and efficient communications may be applied during the actual demand event.

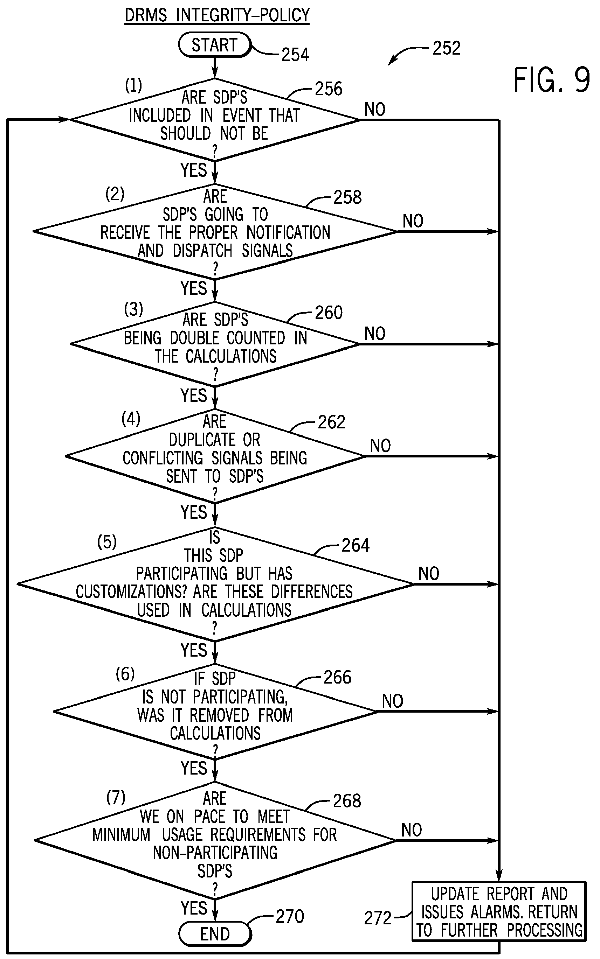

FIG. 9 is a flow chart of a process 252 suitable for automatically determining and/or enforcing certain system policies. For example, the process 252 may be executed via the policy integrity system 52. to determine and/or to store event duration, event instances, exclusion times and days, consecutive days, notice and dispatch communication limits, opt-outs, unavailability, breakdowns, critical levels, government regulations, dispatch reasons, priority between events, move-outs, consumer preferences, and/or consumer options. The process 252 may be implemented as computer instructions or code executable via processor 47 and stored in the memory 49.

In the depicted embodiment, the process 252 may begin at block 254 and determine (decision 256) if there are service delivery points (SDP's) that are included in the upcoming event that should not be included. A SDP is a location and/or device (e.g., service entrance panel) where utility services are connected to client or consumer conduits. The determination for each SDP may be made, for example, by a weighed approach that weighs event duration, event instances, exclusion times and days, consecutive days, notice and dispatch communication limits, opt-outs, unavailability, breakdowns, critical levels, government regulations, dispatch reasons, priority between events, move-outs, consumer preferences, and/or certain consumer options. Users may give more or less weight to any of the above, and the process 252 may then execute a weighted algorithm to filter SDP's that should not be part of the upcoming event.

The process 252 may also determine (decision 258) if the participant SDP's are going to receive proper notification and dispatch signals. In one embodiment, the communications analyzer system 200 may be used, as described earlier, to analyze communications with the SDP's for proper notification and dispatching. The process 252 may then determine (decision 260) if there are SDP's that are being double counted. In one embodiment, queries may be executed to ensure that SDP's are counted only once even though the SDP's may overlap across geographic boundaries where each boundary is focused on a different event.

As depicted, the process 252 may additionally determine (decision 262) if duplicate of conflicting signals are being sent to the SDP's. As described earlier, derivations via the data stores 10, 110 may be made to determine that proper signaling is going to take place during the event. Further, the process 252 may determine (decision 264) if a given SDP is going to be a participant but has certain customizations. For example, customizations regarding energy use, time of outage, outage period, and so on. Accordingly, the process 252 may determine (decision 264) that the customizations are properly accounted for in event calculations.

The process 254 may then determine (decision 266) that if a SDP is a non-participant SDP, the SDP should be removed from any calculations involving the non-participant SDP. Accordingly, calculations may be more reliable and more efficient. With the calculations performed, the process 252 may further determine (decision 268) if certain goals are being met, such as minimum usage requirements for the non-participating SDP's. If all decisions 256-268 are "Yes," the process 252 may then terminate at block 270. Otherwise, the process 252 may execute block 272 to update certain reports and alerts, and then to iterate to any of the determinations 256-268 to re-execute one or more determinations based on updates to fix certain issues.

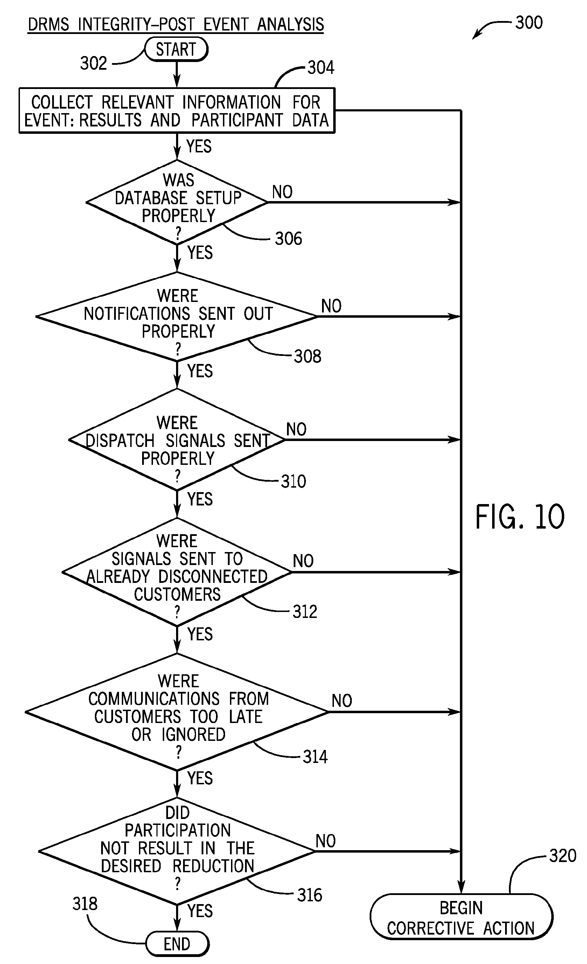

Once the demand event has taken place, it may be useful to provide feedback to improve future events, as well as applying certain corrective actions. Accordingly, FIG. 10 is a flow chart depicting a process 300 suitable for executing a post-event analysis. The process 300 may be implemented as computer instructions or code executable via processor 47 and stored in the memory 49. In the depicted embodiment, the process 300 may begin at block 302 and collect (block 304) relevant information related to the event. For example, event results and participant data may be collected. Event results and participant data may include power produced, outages, event times, communications, participant power usage, and so on. The process 300 may then determine (decision 306) if IT systems, including data stores 10, 110, were adequately prepared. For example, based on post-event analysis, issues such as incorrect queries, timeliness of data processing, availability of systems, and so on, may be determined.

The process 300 may also determine (decision 308) if notifications were adequately sent. For example, timeliness of notification, number of notifications sent, and so on, may be analyzed to determine if the notifications related to the event were provided as desired. Likewise, the process 300 may determine (decision 310) if dispatch signals and associated data were adequately sent, for example, based on the post-event analysis. Additionally, the process 300 may determine (decision 312) if signals were sent to customers that had already been disconnected, and thus should not have been sent.

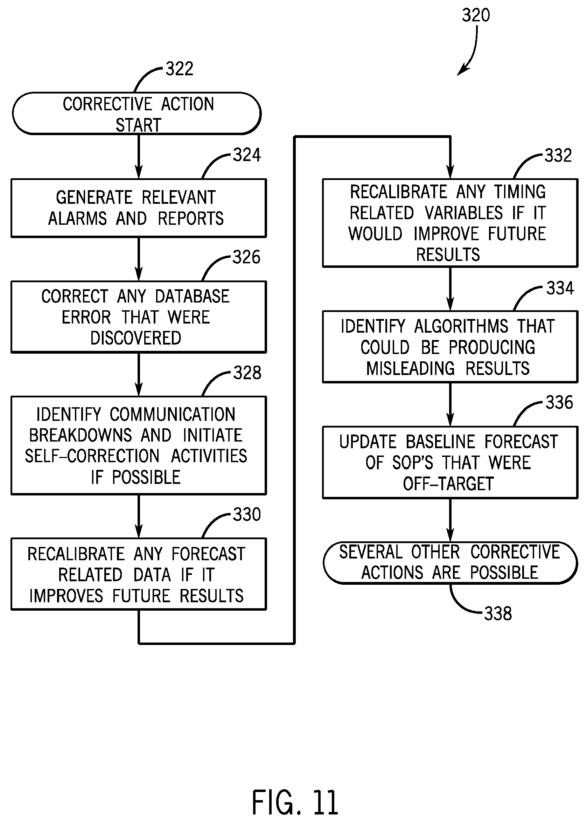

The process 300 may further determine (decision 314) if communications to/from power consumers or customers were late and/or ignored, and if participation (decision 316) resulted in the desired reduction (e.g., electrical power reduction). If decisions 304-316 resulted in a "Yes" determination, then the process 300 may terminate at block 318. Otherwise, the process 300 may initiate (block 320) corrective actions. For example, FIG. 11 is a flow chart depicting an embodiment of the corrective action process 320. The process 320 may be implemented as computer instructions or code executable via processor 47 and stored in the memory 49. In the depicted embodiment, the process 320 may begin at block 322 by generating a set of alarms and reports (block 324). For example, the analysis provided by the process 300 described with respect to FIG. 10 may be collated and reported, and certain alarms or alerts raised. The process 326 may additionally use the analysis provided by the process 300 to correct database errors, and in general, to improve the data stores 10, 110, for the next event.

Additionally, the process 320 may (block 328) identify communications breakdowns, such as bottlenecks, incorrect signaling, and so on, and apply corrective measures accordingly. Further, the process 320 may recalibrate (block 330) any forecasting and data related to forecasting with a focus to improve future results. For example, forecasting algorithms may be analyzed and tweaked to determine better forecasted participations, forecasted energy reductions, and so on. The process 320 may also recalibrate (block 332) timing related data and systems, such as notification timing, dispatch signal timing, and so on. In order to further improve future events, the process 320 may identify (block 334) algorithms that produced misleading results or undesired results. Algorithms related to power production, power reduction, notifications, signaling, querying of data, and so on, may be identified and improved.

The process 320 may also update (block 336) forecasts related to SDP's that were off target, for example, by not reducing energy as much or by reducing energy over their allotted amount. Other corrective actions (block 338) may be taken, including upgrades to hardware, software, and so on. By performing post-event analysis 300 and corrective actions 320, the techniques described herein may use event feedback to improve future events.

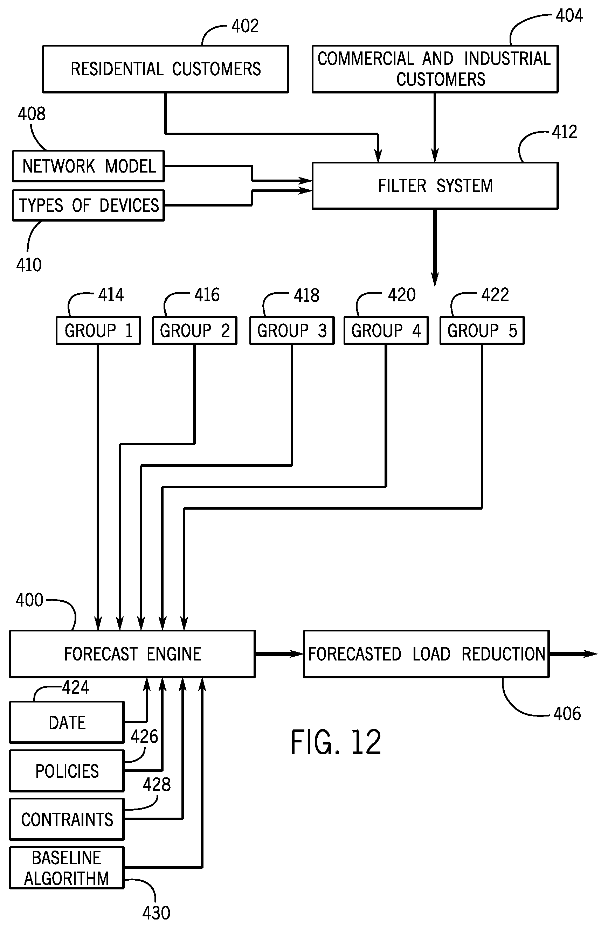

Turning now to FIG. 12, the figure is a block diagram of an embodiment of a forecasting engine system 400 suitable for forecasting, for example, a load reduction with demand events that may include certain sets of residential customers 402 and/or commercial and industrial (CI) customers 404. By improving forecasting of a load reduction 406, the techniques described herein may enable an improved demand event design as well as more efficient and robust power generation, transmission, and distribution system 8.

In the depicted embodiment, a network model 408 may include one or more models of the power generation, transmission, and distribution system 8, including graphs or networks describing relationships between power generation facilities, transmission systems, distribution systems, and power recipients (e.g., customers 402, 404). The model may include submodels defining, for example, power generation capabilities, power transmission capabilities, systems used in distributing power (e.g., distribution substations, distribution primary systems, distribution secondary systems), customer information (e.g., typical power usage, geographic location), and interconnections between power generation systems, power distribution systems, power transmission systems, and power recipients (e.g., customers 402, 404). Device types 410 may include a set of power consuming devices associated with customers 402, 404, as well as power generation, distribution, and transmission devices.

A filter system may take as input the customers 402, 404, the network model 408, and the device types 410 to divide the customers 402, 404 into one or more groups 414, 416, 418, 420, 422. For example, residential customers 402 usually participate in demand response events through pricing programs or by allowing utilities, direct, but limited control, of power consuming devices 410. All consumers or customers 402, 404 are attached to the utility through the network grid 8. It may be desirable to know the location of a consumer 402, 404 on the grid 8 because a main objective is often to reduce consumption off of an A-Bank or substation of the grid 8. Geographic location of customers 402, 404 also is a related factor. One other factor that the filter system 412 may use is a common criteria between customers 402, 404 such as the type of device 410 that may be in use.

By applying data representative or related to residential consumers 402, CI consumers 404, the network model 408, and the device types 410, the filter system 412 may create groups 414, 416, 418, 420, 422 of consumers 402, 404. In one example, the group 1 may be a network group created off of all the residences that are attached to a certain substation XYZ and that are enrolled in peak-price program ABC. In a second example, a criteria-based group 416 is created for everyone that lives in a certain geographic area (e.g., "Valley A") that has a pool pump enrolled in the 123 direct load control program. In this manner, any number of groups, such as the groups 414, 416, 418, 420, 422 may be created by the filter system 412.

The groups 414, 416, 418, 420, 422 created above may then be provided as an input to the forecast engine 400. Other inputs may include date 424 (e.g., demand event date), weather forecast, policies 426 (e.g., policies described above with respect to FIGS. 2 and 9), constraints 428, and a baseline algorithm 430. The date (and day of week) 424 may be important because some consumers 402, 404 may not participate in events on certain days and/or dates. Weather is important not only as an indicator of how much more/less energy may be consumed, but also to determine renewable generation of power. Policies 426 and constraints 428 may be included part of a contract between the utility and the consumers 402, 404 to be adhered to during the demand response event. For example, the contract may specify that events cannot be run on consecutive days, or that the limit of a peak pricing program is X cents per kilowatt hour (kW). The baseline algorithm 430 may include a day-based graph that shows the amount of kW usage we forecast for a user on a given day if they were not participating on an event. The day-based graph may be created by analysis of usage over certain time periods (e.g., week, month, year). In one embodiment, the derivation of the baseline algorithm 430 may be provided using meter readings collected daily over various numbers of days using K-means regression analysis or other statistical technique. The number of days for the analysis may be derived by the utility, for example, the last 10 days or the last 4 Tuesdays, and so on. The forecast engine 400 may use inputs 424, 426, 428, 430 combined with the groups 414, 416, 418, 420, 422 to try different permutations until the engine 400 finds the best fit using, for example, least squares analysis. Accordingly, a more precise derivation of the forecasted load reduction 406 may be provided for each group 414, 416, 418, 420, 422, or combination of groups 414, 416, 418, 420, 422.

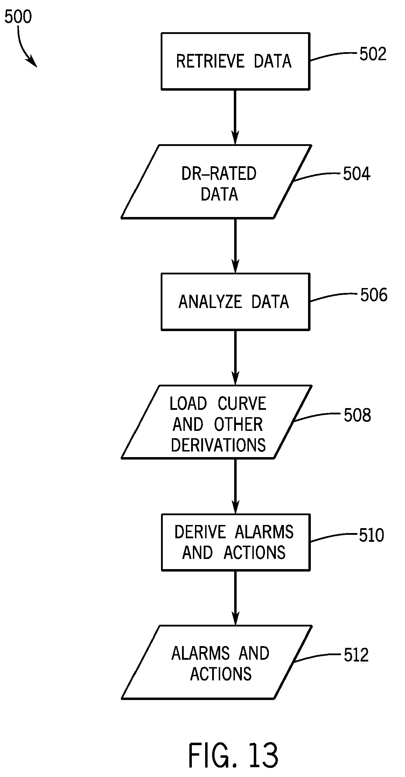

FIG. 13 depicts an embodiment of a process 500 suitable for analyzing demand response event data and providing for various actions and alarms based on the analysis. The process 500 may be may be implemented as computer instructions or code executable via processor 47 and stored in the memory 49. In the depicted embodiment, the process 500 may first retrieve (block 500) demand response event data 502 from a variety of data store systems, including data stores accessible via the DRMS system 10 (e.g., 10, 110). The data 502 may include historical information on energy usage (including under event), upcoming load generation capacity, external factors (e.g., predicted weather), contract information, policy information, device information, customer information, and so on. The alarms and actions may then be based on current conditions (e.g., daily conditions, hourly conditions) but may also include derivations representative of older historical data logged previously.

The process 500 may then analyze (block 504) the data 502. In certain embodiments, statistical techniques, including but not limited to linear regression (e.g., polynomial regression, least squares analysis, multinomial logit, ridge regression), non-linear regression (principal component regression, non-parametric regression, segmented regression), curve fitting analysis, and so on, may be used. Likewise, data mining (e.g., k-means clustering, mean-shift clustering, other clustering, association rules, structured prediction). Statistical and data mining techniques may be combined, and the analysis (block 506) may determine how much load will be applied to the grid system 8. This determination may be automatically derived invention or may be input by an external source or a user. The determination may generate a load curve and other related derivations 508. In one embodiment, the load curve may be representative of one or more loads in the system 8 at certain periods in time.

The generated load curve 508 may include derivations based on interval meter reads, supervisory control and data acquisition (SCADA) systems, predicted variable generation such as wind and solar power, distributed electrical resources including storage (e.g., power storage banks) and/or energy that has been previously purchased from external power providers. Adjustments may be made to account for external factors such as weather, market conditions, customer conditions, and internal factors such as equipment under maintenance or regulatory considerations.

Accordingly, an operator or external system can request target reductions to the load curve 508 (e.g., demand response reductions) and/or request reductions as a generation source. The analysis (block 506) may also include predicting how much reduction will be available to the load curve 508. This prediction in reduction availability can be calculated automatically or maybe input by an external source or a user. The analysis (block 506) may include demand response calculation and optimization algorithms to determine if the available demand reduction is suitable for meeting a requested target reduction or act as a suitable generation source. Indeed, the analysis (block 506) may include calculations that take into account previously contracted external power sources.

The analysis (block 506) make also make a determination if a condition exists where the load reduction amount may be insufficient to meet expected targets or may be outside a tolerance threshold. If so, then the process 500 may derive certain alarms and actions (block 510). For example, certain alarm thresholds may be defined by the demand response operator and if conditions are outside the alarm thresholds then one or more alarms and actions 512 may be executed. The conditions may include load reduction amounts derived via the analysis of block 506, deviations from the load curve 508, or other conditions that may preclude a demand response event from meeting a desired goal or load limit.

The alarms may include audio and visual indications, text messages, emails, automated phone calls, and so on, suitable for delivering information to personnel of the alarm and conditions that cause the alarm. The alarms may also include degree of urgency via text, colors, tones, and so forth. Actions may include automatic actions such as modifying the demand response event, for example by bringing in additional participants to the demand response event, and by interfacing with other systems to alert other systems of the conditions present.

Technical effects of the disclosed embodiments include a DRMS system suitable for providing enhanced demand response (DR) functionality by providing for systems that can automatically check for integrity of DR databases, enforce certain DR policies, check for and validate communications between DR entities, simulate DR events pre event and post event for improved DR events, forecast load reductions, and provide for alarms/alerts and actions triggered by certain thresholds and analysis.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
a processor (47) configured to execute a demand response management system (DRMS) integrity check system (46) included in a DRMS (10), wherein the DRMS integrity system (46) is configured to:
query a database system (50) of the DRMS (10) based on a first data to retrieve a second data, wherein the first data is configured to be used by the DRMS (10) during a demand response event to respond to the event;
verify integrity of the database (50) by verifying that the second data includes a desired data property; and
communicate an indication of the integrity of the database.

2. The system of claim 1, wherein the processor (47) is configured to verify integrity of the database (50) by deriving that database objects to be applied to a demand response event are counted only once and/or verify integrity of the database (50) by verifying one or more database relationships.

3. The system of claim 2, wherein the database objects comprise customer devices (36) that are configured to reduce or to stop power consumption during the demand response event, service delivery points configured to deliver power to the customer devices, meters (30) configured to meter power user, demand response equipment, event identifiers, market objects, regulatory objects, or a combination thereof.

4. The system of claim 2 or 3, wherein verifying the one or more database relationships comprises querying a first database object and verifying that the first database object is associated with a second database object via the one or more database relationships.

5. The system of any of claims 1 to 4, wherein the processor (47) is configured to execute a communications integrity system (56) to verify communications for a demand response event.

6. The system of any of claims 1 to 5, wherein the processor (47) is configured to execute a post event integrity analysis system (60) configured to derive success metrics related to a completion of a demand response event and/or execute a policy integrity system (52) configured to verify one or more limits related to a demand response event.

7. The system of claim 6, wherein the success metrics comprise database setup metrics, notification metrics, dispatch signal metrics, timing of communication metrics, or a combination thereof.

8. The system of claim 6 or 7, wherein the one or more limits comprise a number of events that a customer device (36) is configured to participate in, a calendar limit on days of the week for demand reponse event occurance, an exclusion time configured to exclude participation at a certain time range, a regulatory limit, or a combination thereof.

9. The system of any of claims 6 to 8, wherein the processor (47) is configured to derive service delivery points (SDPs) that should not be included in the demand response event, double counting of SDPs, duplicate signaling configuration for SDPs, customization requirements for SDPs, minimum usage requirements for non-participating SDPs, or a combination thereof.

10. A method, comprising:
executing, via a processor (47), at least one of:
a data integrity system (48) configured to verify a database integrity for a demand response management system (DRMS) (46);
a communications integrity system (56) configured to verify communications for the DRMS (10) during a demand response event;
a post event integrity analysis system (60) configured to derive one or more metrics associated with an occurrence of the demand response event;
a policy integrity system (52) configured to verify one or more limits related to the demand response event; and
a simulation system (62) configured to simulate the demand response event.

11. The method of claim 10, comprising executing, via the processor (47), a demand response forecast engine (400) configured to forecast a reduction in a power load (406) based on a demand response event date (424), a demand response event policy (426), a demand response event constraint (428), a demand response event baseline algorithm (430), or a combination thereof and/or a demand response event load reduction analyzer system configured to analyze demand response event data to derive a predicted load reduction for the demand response event.

12. The method of claim 10 or 11, wherein the DRMS (10) comprises a database (50) having an application services boundary (104), the application services boundary (104) comprising a forecasting system (114) configured to forecast energy usage during the demand response event, an alert system (112) configured to alert based on demand response, or a combination thereof.

13. A computer a program comprising computer program code means adapted to perform the method of any of claims 10 to 12, when executed by a computer processor.

14. The computer program of claim 13, embodied on a computer-readable medium.
